# EUROPÄISCHE PATENTSCHRIFT

(11) **EP 0 798 135 B1**
(45) Veröffentlichungstag und Bekanntmachung des Hinweises auf die Patenterteilung: **15.05.2002**
(21) Anmeldenummer: 97102492.2
(22) Anmeldetag: 15.02.1997
(51) Int. Cl.: B60B 1/06, B60B 3/10

(54) **Rad für ein Kraftfahrzeug**
Wheel for a motor vehicle
Roue pour véhicule à moteur

(30) Priorität: 27.03.1996 DE 19612115
(43) Veröffentlichungstag der Anmeldung: 01.10.1997
(73) Patentinhaber: Dr.Ing.h.c. F. Porsche Aktiengesellschaft, 70435 Stuttgart (DE)
(72) Erfinder: Heiler, Roland, 75233 Tiefenbronn (DE)

(56) Entgegenhaltungen:
- EP-A- 0 552 436
- DE-A- 3 217 457
- DE-A- 4 138 558

## Beschreibung

Die Erfindung bezieht sich auf ein Rad für ein Kraftfahrzeug nach dem Oberbegriff des Anspruchs 1.

Aus dem Geschmacksmuster M 95 03 760 ist ein Rad für ein Kraftfahrzeug bekannt, das zwischen Luftöffnungen Rippen aufweist, die aus jeweils zwei radial angeordneten Außenstegen bestehen und sich vom Felgenhorn bis zum Radzentrum hin erstrecken, wobei zwischen den Außenstegen eine durchgehende längliche Luftöffnung vorgesehen ist.

Aufgabe der Erfindung ist es, ein Rad für ein Kraftfahrzeug zu schaffen, das einen Radstern mit einem optimalen Luftdurchsatz aufweist und eine hohe Festigkeit gewährleistet.

Diese Aufgabe wird erfindungsgemäß durch die kennzeichnenden Merkmale des Anspruchs 1 gelöst. Weitere vorteilhafte Merkmale beinhalten die Unteransprüche.

Die mit der Erfindung hauptsächlich erzielten Vorteile bestehen darin, daß der Radstern mehrere, insbesondere fünf Rippen umfaßt, die einen fachwerkartigen Festigkeitsverbund untereinander bilden. Hierzu sind zwischen Außenstegen der Rippen diagonal verlaufende Innenstege vorgesehen, die sich kreuzend angeordnet sind, wobei der Kreuzungspunkt etwa auf einem mittleren Durchmesser des Rades liegt.

Trotz einer filigranen Gestaltung der einzelnen Rippen mit innenliegenden zusätzlichen, insbesondere vier Luftöffnungen, ist in vorteilhafter Weise noch ein stabiles Rad mit großer Festigkeit, insbesondere großer Torsionssteifigkeit, möglich. Dies wird insbesondere dadurch erreicht, daß die sich gegenüber liegenden Außenstege sowie jeweils ein diagonaler Innensteg jeder Rippe sich in einem Knotenpunkt treffen, d.h. die Stege vereinigen sich in einem Bereich um ein Bohrloch für eine Befestigungsschraube.

Zusätzlich zu den relativ großen Luftöffnungen zwischen den einzelnen Rippen sind innerhalb der Rippen kleinere Luftöffnungen vorgesehen, die etwa polygonal, d.h. dreieckförmig ausgebildet sind. Durch die diagonale Lage der Innenstege liegen sich jeweils zwei in etwa gleich große Luftöffnungen gegenüber.

Die großen Luftöffnungen zwischen den Rippen des Rades sind dreieckförmig ausgestaltet und weisen eine durch das Rad vorgegebene äußere Bogenform als Begrenzung auf. Im Scheitelpunkt der Außenstege der Rippen sind die Öffnungen ausgerundet, wobei diese Ausrundungen den Bohrungen für die Befestigungsschrauben gegenüberliegen.

Ein Ausführungsbeispiel der Erfindung ist in der Zeichnung dargestellt und wird im folgenden näher beschrieben.

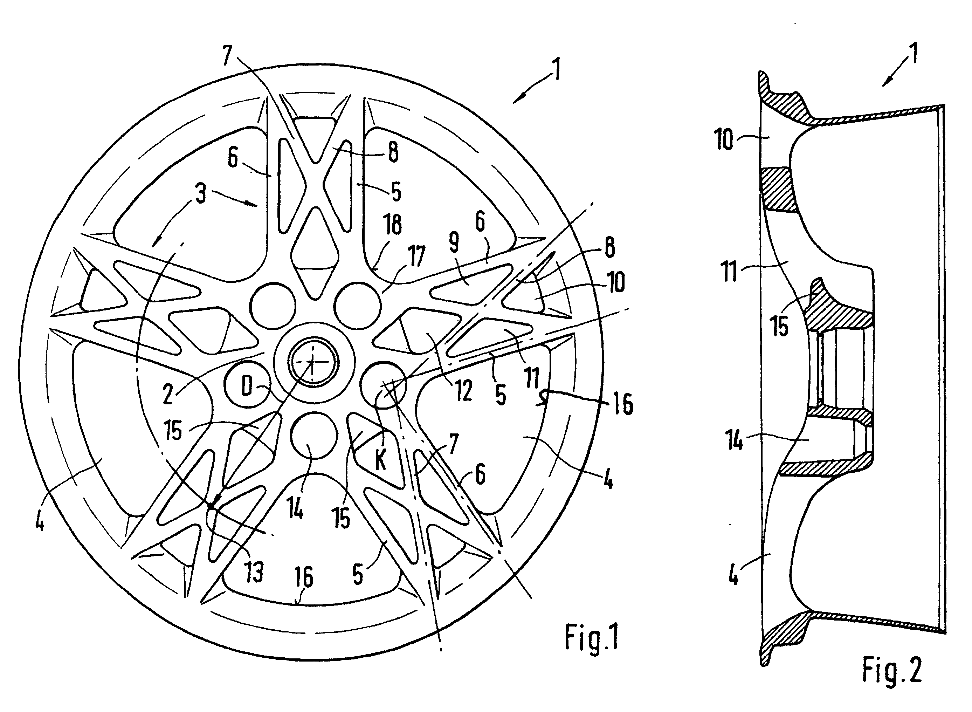

Es zeigen
- Fig. 1: eine Vorderansicht eines Rades mit aus Innenstegen und Außenstegen bestehenden Rippen und
- Fig. 2: einen Schnitt durch das Rad.

Das Rad 1 umfaßt in einem Radstern 2 mehrere Rippen 3, die zwischen sich große Luftöffnungen 4 bilden. Diese Rippen 3 bestehen im wesentlichen aus jeweils zwei etwa parallel angeordnete Außenstege 5, 6, zwischen denen diagonal erstreckende Innenstege 7, 8 angeordnet sind. Diese Innenstege 7, 8 sind kreuzend angeordnet und bilden zwischen sich und den Außenstegen 5, 6 dreieckförmige Luföffnungen 9, 10, 11 und 12. Ein Kreuzungspunkt 13 der Innenstege 7, 8 liegt in etwa auf einem mittleren Raddurchmesser D.

Die unmittelbar gegenüberstehenden Außenstege 5 von benachbarten Rippen 3, die zwischen sich die große Luftöffnung 4 einschließen, sowie die diagonal verlaufenden Innenstege 7 bzw. 8 treffen sich, d.h. die Mittellinien dieser Stege treffen sich etwa im Bereich K der Bohrung 14 für die Befestigungsschrauben des Rades im Radzentrum.

Von den vier kleineren Luftöffnungen 9, 10, 11 und 12 in jeder Rippe 3 liegen sich jeweils zwei Luftöffnungen 9 und 11 sowie 10 und 12 gegenüber. Diese Luftöffnungen sind dreieckförmig ausgebildet, wobei die Öffnungen 9 und 11 größere Luftdurchlässe bilden als die beiden weiteren Luftöffnungen 10 und 12.

Die innere Luftöffnung 12 weist optisch insgesamt eine rautenförmige Begrenzungskante auf, wobei der zwischen den Bohrungen 14 liegende Bereich eine geschlossene, vertieft liegende Fläche 15 besitzt, damit die Radnabe eine geforderte Festigkeit aufweisen kann. Anschließend an diese Fläche 15 bildet sich die dreieckförmige Luftöffnung 12 aus.

Die größeren Luftöffnungen 4 zwischen den Speichen 3, weisen eine dem vorgegebenen Verlauf des Rades ausgebildeten Außenbogen 16 auf, an dem sich die Außenstege 5, 6 der Rippen 3 anschließen. Im Scheitelpunkt 17 der Außenstege 5, 6 ist die Luftöffnung ausgerundet. Diese Ausrundung 18 liegt der Bohrung 14 unmittelbar gegenüber.

## Patentansprüche

1. Rad (1) für ein Kraftfahrzeug mit einem Radstern (2), der zwischen großen Luftöffnungen (4) Rippen (3) aufweist, die aus radial angeordneten Stegen bestehen und sich vom Radzentrum aus bis zum Felgenhorn hin erstrecken, wobei jede Rippe (3) zwei radiale Außenstege (5, 6) umfasst, die annähernd parallel zueinander liegen, **dadurch gekennzeichnet, dass** zwischen zwei radialen Außenstegen (5, 6) mindestens zwei diagonal angeordnete Innenstege (7, 8) vorgesehen sind, die in einer sich kreuzenden Anordnung die radialen Außenstege (5, 6) miteinander verbinden.

2. Rad nach Anspruch 1, **dadurch gekennzeichnet, dass** zwischen den Innenstegen (7, 8) und den Außenstegen (5, 6) der Rippen (3) polygonale kleine Luftöffnungen (9, 10, 11 und 12) gebildet sind und sich jeweils zwei Luftöffnungen (9, 11 und 10,12) unmittelbar gegenüber stehen.

3. Rad nach den Ansprüchen 1 oder 2, **dadurch gekennzeichnet, dass** Mittellinien der gegenüberliegenden Außenstege (5, 6) zweier benachbarter Rippen (3) und jeweils eine Mittellinie eines diagonalen Innensteges (7 und 8) jeder Rippe (3) im Bereich einer Bohrung (14) für eine Befestigungsschraube zusammenlaufen.

4. Rad nach den Ansprüchen 1, 2 oder 3, **dadurch gekennzeichnet, dass** mindestens vier Luftöffnungen (9, 10, 11 und 12) innerhalb der Rippen (3) zwischen den Außenstegen (5, 6) angeordnet sind.

5. Rad nach einem oder mehreren der vorhergehenden Ansprüche, **dadurch gekennzeichnet, dass** die teilweise zwischen den Bohrungen (14) angeordnete Luftöffnung (12) rautenförmige Begrenzungskanten aufweist und der zwischen der Bohrung (14) liegende Bereich eine tiefergelegene Fläche (15) besitzt, an die sich die dreieckförmige Luftöffnung (12) anschließt.

6. Rad nach einem oder mehreren der vorhergehenden Ansprüche, **dadurch gekennzeichnet, dass** zwischen zwei sich gegenüber liegenden Außenstegen (5, 6) zweier benachbarter Rippen (3) dreieckförmige Luftöffnungen (4) gebildet sind, welche radiale außenliegend eine bogenförmige äußere Begrenzung (16) und im Scheitelpunkt (17) der Außenstege (5, 6) eine Ausrundung (18) aufweisen, die jeweils der Bohrung (14) für die Befestigungsschraube im Radzentrum gegenübersteht.

7. Rad nach einem oder mehreren der vorhergehenden Ansprüche, **dadurch gekennzeichnet, dass** der Kreuzungspunkt (13) der Innenstege (7, 8) etwa auf einem mittleren Raddurchmesser (D) liegt.

## Claims

1. A wheel (1) for a motor vehicle with a wheel spider (2) comprising ribs (3) between large air openings (4), the ribs (3) comprising webs arranged radially and extending from the wheel centre as far as the rim flange, wherein each rib (3) comprises two radial, outer webs (5, 6) situated substantially parallel to one another, **characterized in that** at least two inner webs (7, 8) arranged diagonally and connecting two radial outer webs (5, 6) in a crossing arrangement are provided between the radial outer webs (5, 6).

2. A wheel according to Claim 1, **characterized in that** small polygonal air openings (9, 10, 11 and 12) are formed between the inner webs (7, 8) and the outer webs (5, 6) of the ribs (3), and two respective air openings (9, 11 and 10, 12) are situated directly opposite each other.

3. A wheel according to Claim 1 or 2, **characterized in that** median lines of the opposed outer webs (5, 6) of two adjacent ribs (3) and one respective median line of a diagonal inner web (7 and 8) of each rib (3) converge in the region of a bore (14) for a fastening bolt.

4. A wheel according to Claim 1, 2 or 3, **characterized in that** at least four air openings (9, 10, 11 and 12) are arranged inside the ribs (3) between the outer webs (5, 6).

5. A wheel according to one or more of the preceding Claims, **characterized in that** the air opening (12) arranged in part between the bores (14) has rhomboidal boundary edges, and the region situated between the bores (14) has a face (15) situated at a lower level and adjoined by the triangular air opening (12).

6. A wheel according to one or more of the preceding Claims, **characterized in that** triangular air openings (4) are formed between two mutually opposed outer webs (5, 6) of two adjacent ribs (3), the air openings (4) comprising, radially on the outside, an arcuate outer boundary (16) and, at the apex (17) of the outer webs (5, 6), a rounded portion (18) opposite the respective bore (14) for the fastening bolt in the wheel centre.

7. A wheel according to one or more of the preceding Claims, **characterized in that** the point of intersection (13) of the inner webs (7, 8) is situated substantially on a mean diameter (D) of the wheel.

## Revendications

1. Roue (1) pour un véhicule automobile avec une étoile de roue (2) qui comporte des rayons (3) entre de grandes ouvertures d'air (4), lesquels sont constitués de nervures qui sont disposées radialement et qui s'étendent depuis le centre de la roue jusqu'à la corne de jante, chaque rayon (3) comprenant deux nervures extérieures (5, 6) qui sont approximativement parallèles entre elles, **caractérisée en ce qu'**entre deux nervures extérieures (5, 6) sont prévues au moins deux nervures intérieures (7, 8) disposées en diagonale qui relient entre elles les nervures extérieures radiales (5, 6), dans une disposition en croix.

2. Roue selon la revendication 1, **caractérisée en ce qu'**entre les nervures intérieures (7, 8) et les nervures extérieures (5, 6) des rayons (3) sont formés de petites ouvertures d'air (9, 10, 11, et 12) polygonales et deux ouvertures d'air (9, 11) et (10, 12) se font face directement.

3. Roue selon les revendications 1 ou 2, **caractérisée en ce que** des lignes centrales des nervures extérieures (5, 6) opposées de deux rayons (3) voisins et une ligne centrale d'une nervure intérieure diagonale (7 et 8) de chaque rayon (3) sont réunies dans la zone d'un trou (14) pour une vis de fixation.

4. Roue selon les revendications 1, 2 ou 3, **caractérisée en ce qu'**au moins quatre ouvertures d'air (9, 10, 11 et 12) sont disposées à l'intérieur des rayons (3), entre les nervures extérieures (5, 6).

5. Roue selon une ou plusieurs des revendications précédentes, **caractérisée en ce que** l'ouverture (12), disposée en partie entre les trous (14), présente des bords de délimitation en forme de losange et la zone, située entre le trou (14), présente une surface (15) située plus bas à laquelle se raccorde l'ouverture d'air (12) triangulaire.

6. Roue selon une ou plusieurs des revendications précédentes, **caractérisée en ce qu'**entre deux nervures extérieures (5, 6) se faisant face de deux rayons (3) voisins sont formées des ouvertures d'air (4) triangulaires qui présentent, à l'extérieur radialement, une délimitation extérieure (16) en forme d'arc et, au sommet (17) des nervures extérieures (5, 6), une partie arrondie (18) qui fait face dans chaque cas au trou (14) pour la vis de fixation au centre de la roue.

7. Roue selon une ou plusieurs des revendications précédentes, **caractérisée en ce que** le point de croisement (13) des nervures intérieures (7, 8) se situe approximativement sur un diamètre central (D) de la roue.
